# EUROPEAN PATENT APPLICATION

(11) **EP 2 292 410 A2**
(43) Date of publication of application: **09.03.2011**
(21) Application number: 10008919.2
(22) Date of filing: 27.08.2010
(51) Int. Cl.: B29C 51/38, B29C 51/44

(54) **Improved device for moving the mold nest of a press, particularly for manufacturing plastic articles**

(30) Priority: 03.09.2009 IT MI20091530
(71) Applicant: WM Wrapping Machinery SA, 6855 Stabio (CH)
(72) Inventor: Gotti, Luigi, 6833 Vacallo (CH); Belardi, Pierluigi, 20090 Rodano (Milano) (IT); Boffelli, Vittorio, 22036 Erba (Como) (IT)
(74) Representative: Forattini, Amelia

(57) **Abstract**

A device for moving the mold nest of a press, for manufacturing plastic articles, comprises a forming station constituted by a lower mold nest, supported by a movable bed (3), and by a fixed upper mold part; the movable bed (3) has a closure position, in which the articles are molded, and a position for expelling the formed articles; the device comprises a double system of desmodromic cams that produce a vertical motion and a tilting motion of the movable bed (3) in order to move it from the closure position to the expulsion position and vice versa; the double system of desmodromic cams comprises a first system of desmodromic cams (5, 55), which produces the vertical motion of the movable bed (3), and a second system of desmodromic cams (7), which produces the rotation of the movable bed (3); the first desmodromic system comprises a first cam (5) and a complementary cam (55) which acts on a first lever system (6); the second desmodromic system comprises a second cam (7) which acts on a second lever system (8).

## Description

The present invention relates to an improved device for moving the mold nest of a press, particularly for manufacturing plastic articles.

The device according to the present invention is applied to a machine which has a movable lower mold nest, in which the articles are formed and which has at least two operating positions: a position for forming the articles and a position for expelling the articles.

Machines of this type have the problem of moving the mold nest with sufficient speed and precision from the forming position to the expulsion position and vice versa.

In the expulsion position, the movable bed is in fact inclined and lowered with respect to the forming position.

The movement of the mold nest is traditionally entrusted to a mechanism constituted by a system of levers actuated by cams.

US-4565513 discloses a machine that has a mechanism of such type.

EP-A-1982822 discloses a device for moving the mold nest of a press, for manufacturing plastic articles, **characterized in that** it comprises a double system of desmodromic cams, a first desmodromic system which acts on a parallelogram system, and a second desmodromic system that acts on a second lever system.

The device described in EP-A-1982822 constituted a significant improvement with respect to prior devices and was capable of increasing the production rate significantly. Moreover, such device was more compact and rigid than preceding devices and allowed a reduction of the adjustment operations.

The aim of the present invention is to provide an improved device for moving the mold nest of a press, particularly for manufacturing plastic articles.

Within the scope of this aim, an object of the invention is to provide a device that is more economic to manufacture than the device described in EP-A-1982822.

Another object of the invention is to provide a device whose critical components are less stressed.

Another object is to provide a device that can be manufactured with fewer possibilities of manufacturing errors.

This aim and other objects that will become better apparent hereinafter are achieved by a device for moving the mold nest of a press, particularly for manufacturing plastic articles, comprising a forming station constituted by a lower mold nest, supported by a movable bed, and by a fixed upper mold part; said movable bed has at least one closure position, in which the articles are molded, and at least one position for expelling the formed articles; said device comprises a double system of desmodromic cams that produces a vertical motion and a tilting motion of said movable bed in order to move it from the closure position to the expulsion position and vice versa; said double system of desmodromic cams comprises a first system of desmodromic cams, which produces the vertical motion of said movable bed, and a second system of desmodromic cams, producing a rotation of said movable bed; said device is **characterized in that** said first desmodromic system comprises a first cam and a complementary cam which acts on a first lever system; said second desmodromic system comprises a second cam which acts on a second lever system.

Further characteristics and advantages will become better apparent from the description of preferred but not exclusive embodiments of the invention, illustrated by way of non-limiting example in the accompanying drawings, wherein:

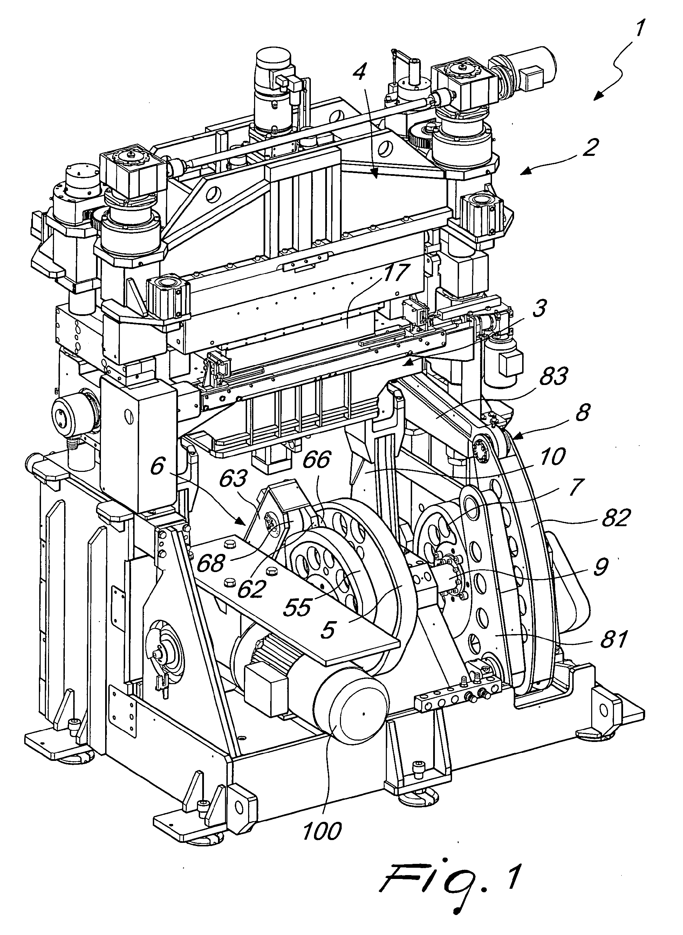

Figure 1 is a schematic perspective view of the device according to the present invention;
Figure 2 is a view, similar to the preceding one, wherein the device is shown on its own, without the fixed upper mold part, in the power squaring position;
Figure 3 is a schematic side view of the mechanism of the device in the position of the preceding figure;
Figure 4 is a view, similar to Figure 2, wherein the device is shown in the power descent position;
Figure 5 is a schematic side view of the mechanism of the device in the position of the preceding figure;
Figure 6 is a view, similar to Figure 2, wherein the device is shown in the tipping descent position;
Figure 7 is a schematic side view of the mechanism of the device in the position of the preceding figure;

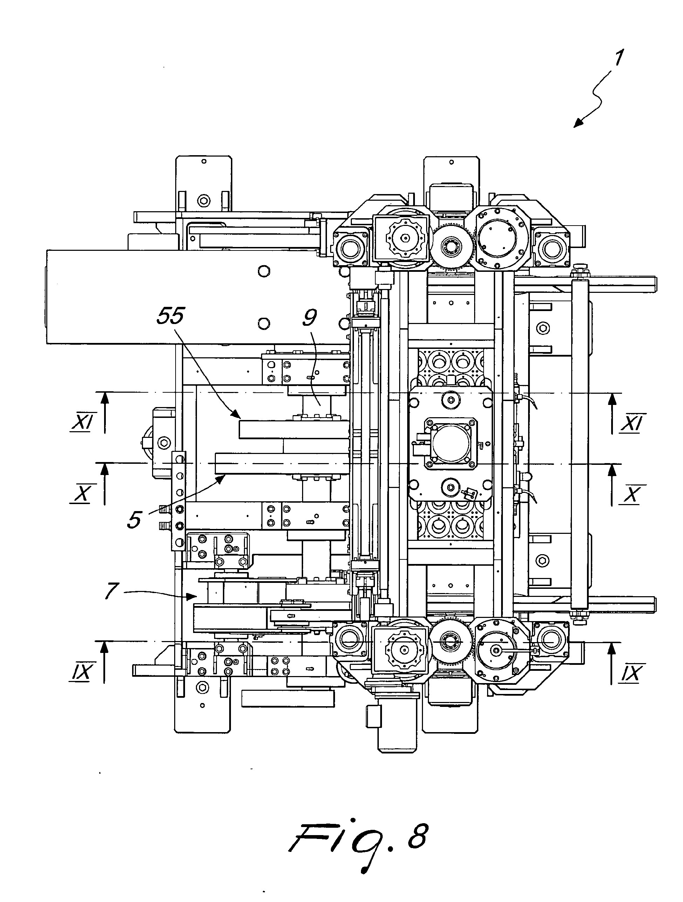

Figure 8 is a plan view of the device;

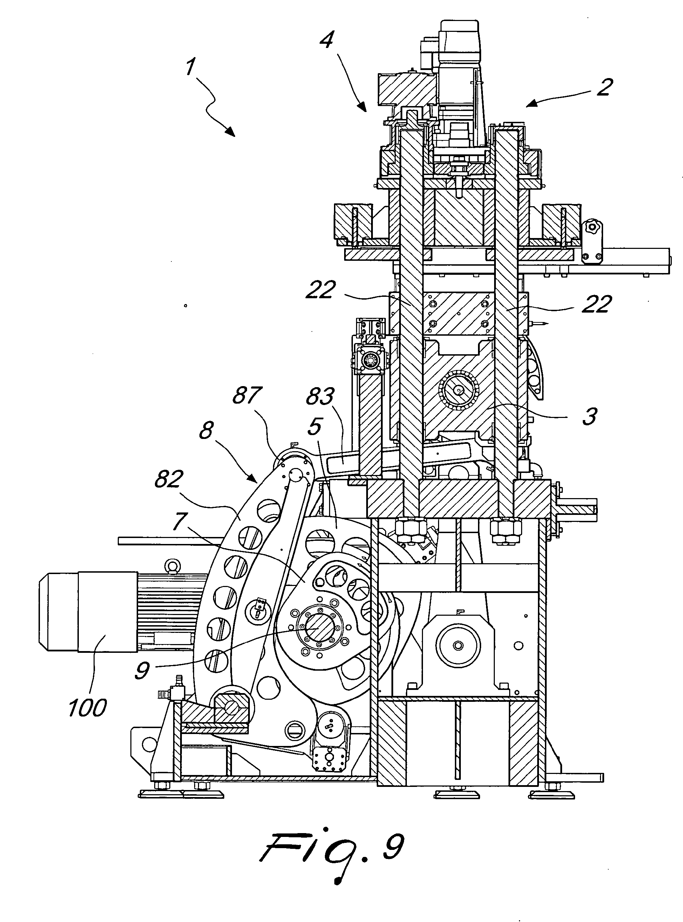

Figure 9 is a sectional side view, taken along the sectional plane IX-IX of Figure 8;

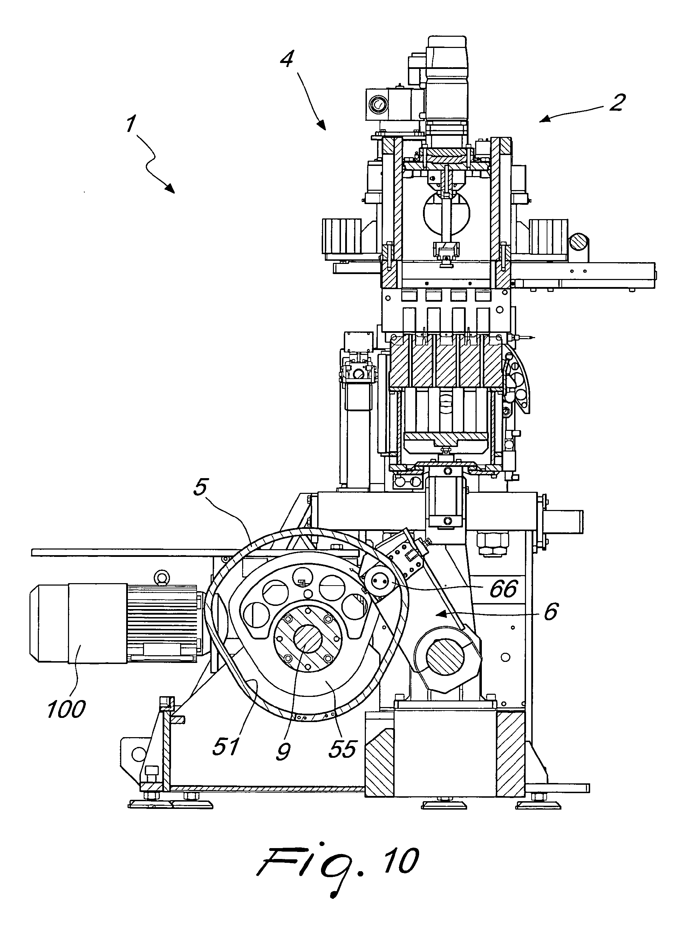

Figure 10 is a sectional side view, taken along the sectional plane X-X of Figure 8;

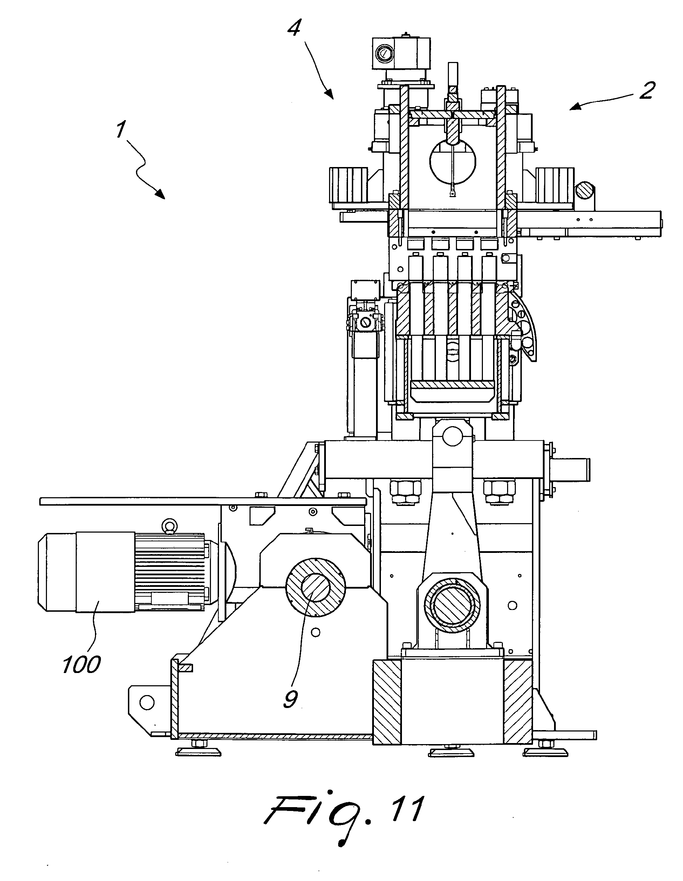

Figure 11 is a sectional side view, taken along the sectional plane XI-XI of Figure 8;

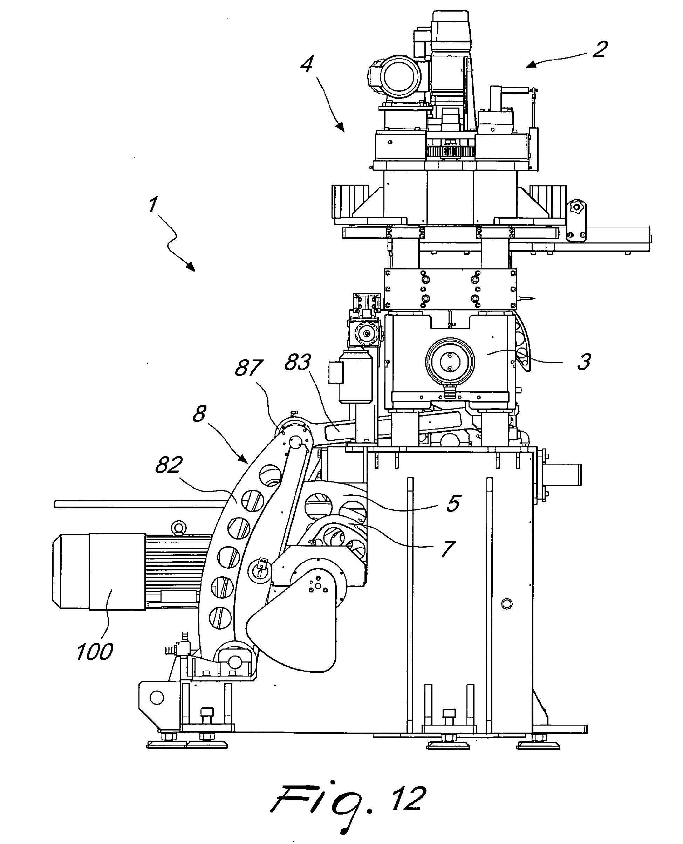

Figure 12 is a side view of the device and of the fixed upper mold part.

With reference to the cited figures, the device according to the invention, generally designated by the reference numeral 1, comprises a forming station 2, which is constituted by a lower mold nest 17, supported by a movable bed 3, and by a fixed upper mold part 4, which is associated with columns of a press of which the device according to the invention is a part.

The movable bed 3 has a closure position, in which the articles are molded, and a position for expelling the formed articles.

The device 1 comprises a double system of desmodromic cams; the desmodromic cams produce a vertical motion and a tilting motion of the movable bed 3 in order to move it from the closed position to the expulsion position and vice versa.

A first system of desmodromic cams actuates the vertical motion of the movable bed 3 while a second system of desmodromic cams actuates its rotation.

The first desmodromic system comprises a first cam 5 and a complementary cam 55, which act on a first lever system 6.

The second desmodromic system comprises a second cam 7, which acts on a second lever system 8.

The cams 5, 55 and 7 are mounted on a single shaft 9, which is actuated by the motor 100 of the press.

The first lever system 6 comprises a fork lever 10, which is provided with a first arm 63 and with a second arm 62; the fork lever 10 is associated with the movable bed 3 and is hinged to the frame of the machine in a fork hinge 11.

The second lever system 8 comprises a rocker lever constituted by a first arm 81 and by a second arm 82 and connected to a third lever 83, which is associated with the movable bed 3.

In the first lever system 6, the second arm 62 has, at its end, a cam follower 66, which co-operates with an internal profile 51 of the first cam 5.

The first arm 63 of the fork lever at 10 has a cam follower 68, which co-operates with the complementary cam 55.

The two cam followers 66 and 68 constitute the first desmodromic system, respectively with the first cam 5 and with the complementary cam 55. The first desmodromic system comprises the first lever system 6, which actuates the vertical motion of the movable bed 3.

In the second lever system 8, the rocker lever is hinged to the frame of the machine in a rocker hinge 84, which is arranged in the connecting region of the arms 81 and 82 that constitute the rocker lever.

The free end of the first arm 81 comprises a cam follower 85, which co-operates with a first profile 71 of the second cam 7.

The second arm 82 has a cam follower 86, which co-operates with a second profile 72 of the second cam 7.

The second arm 82 has a free end, which is pivoted to the third lever 83 in an arm hinge 87.

The third lever 83 is hinged to the movable bed 3 in a hinge 88, which is arranged laterally thereto.

The second lever system 8 provides the tilting movement of the movable bed 3, by means of the rotation of the second cam 7.

The device according to the present invention also comprises a centering system, which provides a perfect centering of the mold guide posts 22 in adapted seats of the lower mold part 17 during the closure thereof.

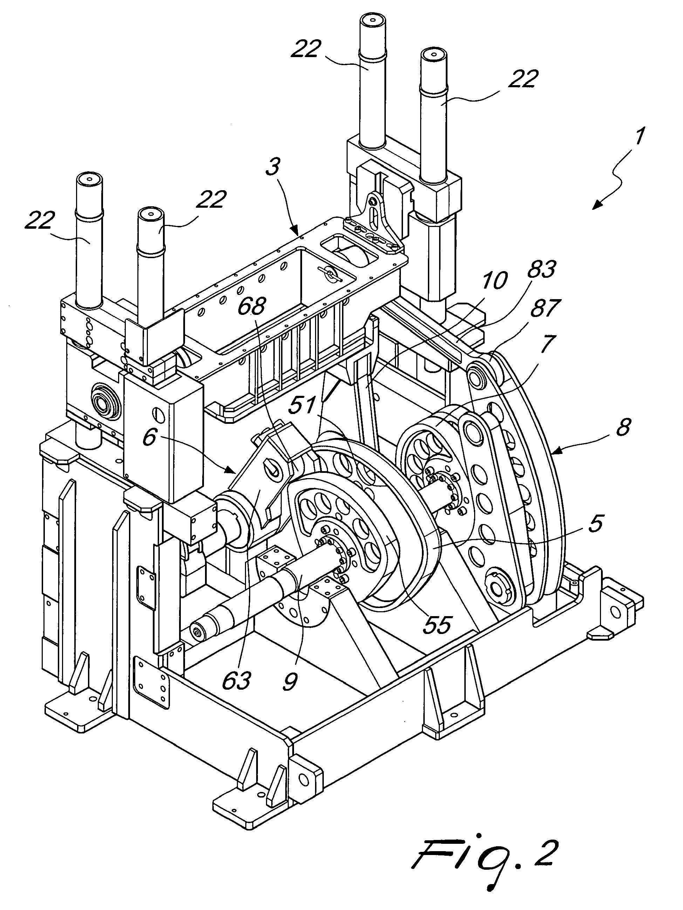

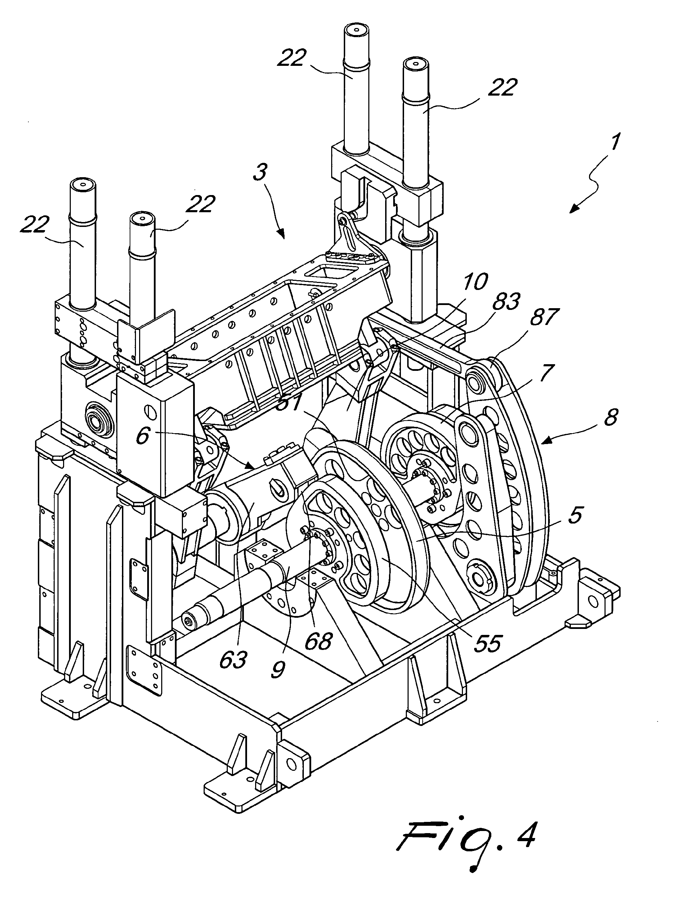

The motion sequence of the movable bed 3 is shown in Figures 2-7.

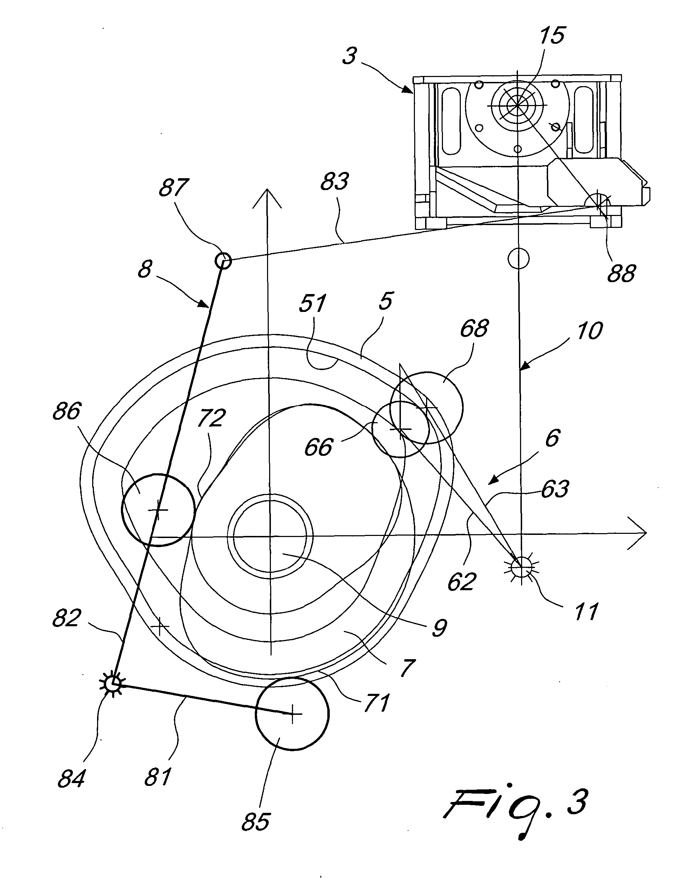

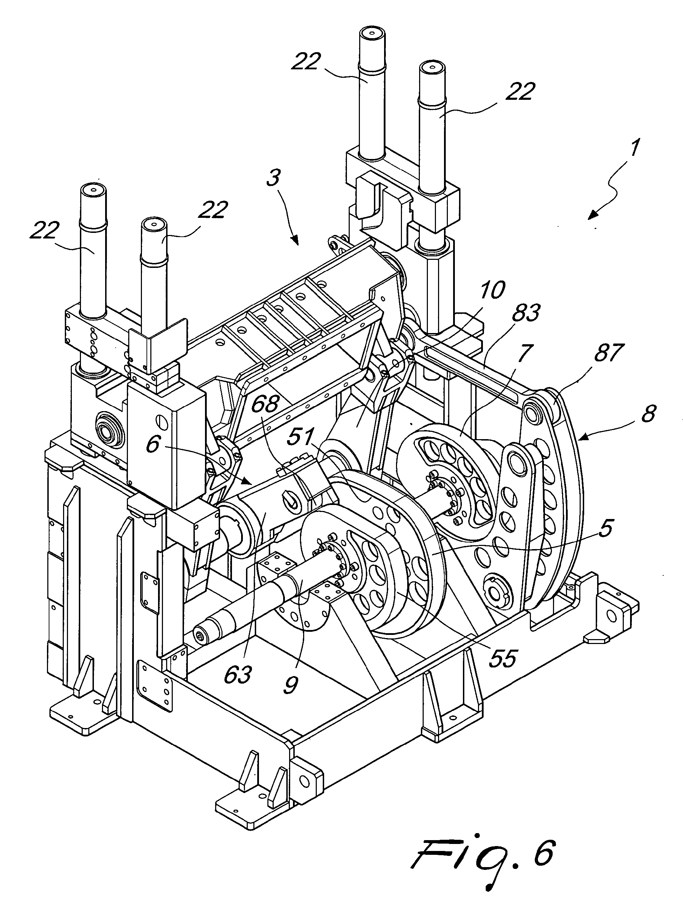

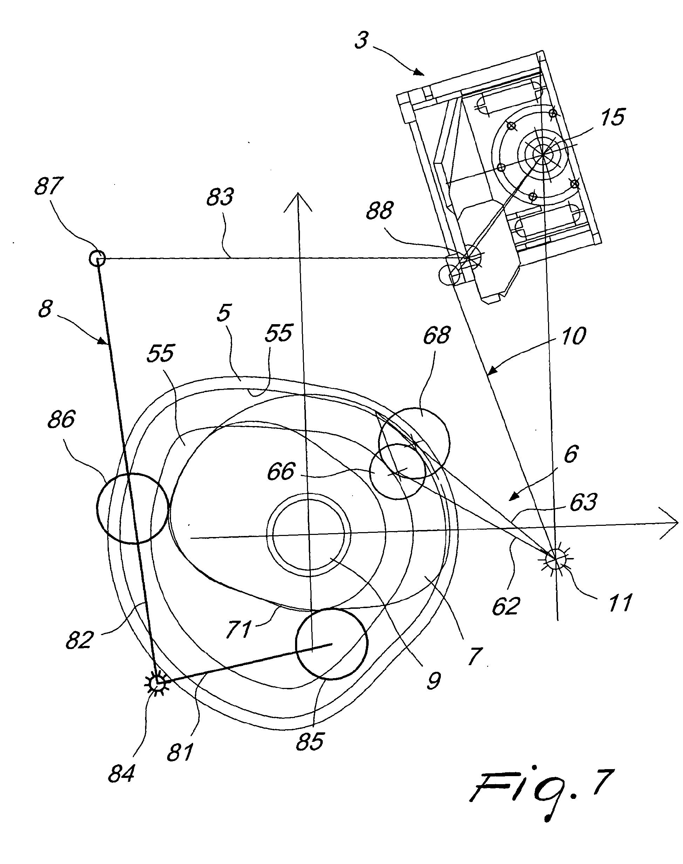

The device allows to move the movable bed 3 from the closure position, shown in Figures 2 and 3, in which the articles are molded, to a position for expelling the formed articles, shown in Figures 6 and 7, and from the expulsion position again to the closure position in order to repeat the molding and expulsion cycle.

The vertical motion of the movable bed 3 is provided by the first lever system 6 as follows.

The counterclockwise rotation, with reference to Figures 3, 5 and 7, of the first cam 5 acts on the respective cam follower 66 of the second arm 62 of the fork lever 10, moving the fork lever 10 to the left.

The internal profile 51 of the cam 5 is such that the initial motion of the fork lever 10 is reduced and is meant to slightly lower the movable bed 3.

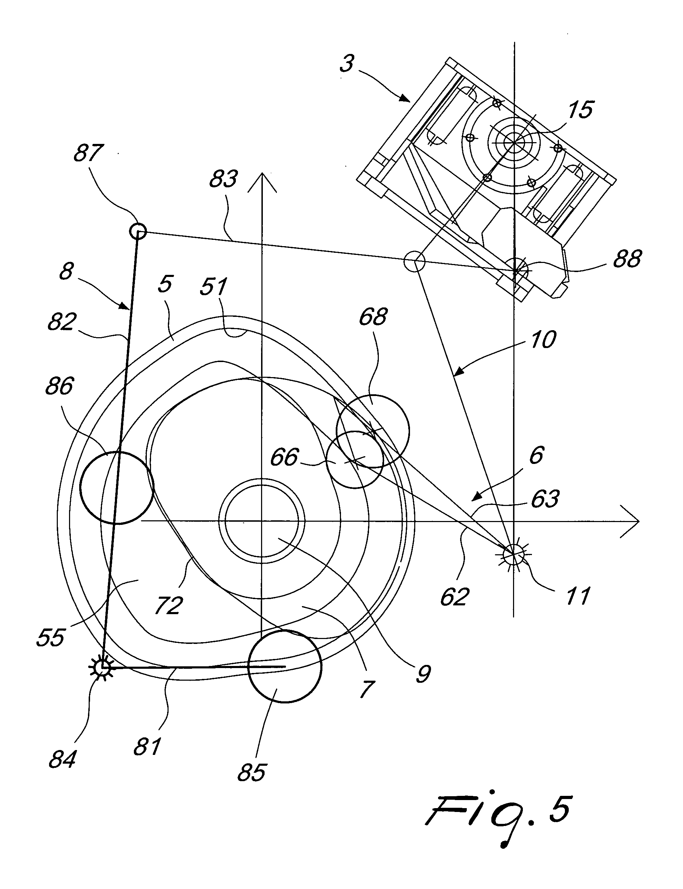

Continuing in its rotation, the cam 5 moves further the second arm 62 of the fork lever 10 and again lowers the movable bed 3, as shown in Figure 5.

The movable bed 3 simultaneously lowers and tilts, as shown in Figures 5 and 7.

The rotation of the second cam 7 causes a rotation to the left, with reference to Figures 5 and 7, of the second arm 82 of the rocker lever, which moves the third lever 83, which by acting on the lateral hinge point 88 of the movable bed 3 causes is rotation to the right about the center defined by the hinge 15, moving the movable bed 3 and the corresponding lower mold nest 17 to the expulsion position, which also corresponds to the lowest point, shown in Figure 7.

The profile of the second cam 7 is designed to allow the movable bed 3 to remain in the expulsion position for the time required to complete the expulsion of the molded articles, after which the second cam 7 acts on the cam follower 85 of the first arm 81 of the rocker lever, rotating it clockwise, thus levelling the movable bed 3.

In the step for levelling the movable bed 3, the complementary cam 55 is activated and acts on the cam follower 68 of the first arm 63 of the fork lever 10, which rotates clockwise, causing the movable bed 3 to lift.

In the closure position, shown schematically in Figure 2, the intense stresses of the press in the molding step, which in the long term would cause the failure of the supports of the movable bed 3, which are constituted by the fork hinge 11, do not affect the second lever system 8, which is responsible for the tilting motion of the movable bed 3, because the lowering of the movable bed 83 is absorbed by the rotation of the lever 83, without straining the arm hinge 87 and the other components of the second lever system 8.

This is advantageous, because it avoids the registering of several components of the device, if not of the fork lever 10.

In practice it has been found that the invention achieves the intended aim and objects, a device having been provided in which, with respect to the device disclosed in EP-A-1982822, the parallelogram system actuated by the first desmodromic system has been eliminated.

The device according to the present invention has an economic advantage, with respect to the device described in EP-A-1982822, in that it has a smaller number of components.

From a functional and technological standpoint also, the device according to the present invention has advantages with respect to preceding devices.

The power cam assembly can be machined and finished in a single process, providing greater precision in desmodromic operation and reduced stresses on the rollers of the cam followers.

By means of the reduction of the critical points of the mechanism, the possibilities of error during construction also have been reduced.

The device according to the invention also provides for a reduction of the moving masses, with a benefit for the parts subjected to stresses.

This application claims the priority of Italian Patent Application No. MI2009A001530, filed on September 3, 2009, the subject matter of which is incorporated herein by reference.

## Claims

1. A device for moving the mold nest of a press, particularly for manufacturing plastic articles, comprising a forming station (2) constituted by a lower mold nest (17), supported by a movable bed (3), and by a fixed upper mold part (4); said movable bed (3) has at least one closure position, in which the articles are molded, and at least one position for expelling the formed articles; said device (1) comprises a double system of desmodromic cams (5, 55, 7) producing a vertical motion and a tilting motion of said movable bed (3) in order to move it from the closure position to the expulsion position and vice versa; said double system of desmodromic cams comprises a first system of desmodromic cams (5, 55), which produces the vertical motion of said movable bed (3), and a second system of desmodromic cams (7), which produces the rotation of said movable bed (3); said device is **characterized in that** said first desmodromic system comprises a first cam (5) and a complementary cam (55) which acts on a first lever system (6); said second desmodromic system comprises a second cam (7) which acts on a second lever system (8).

2. The device according to claim 1, **characterized in that** said cams (5, 55, 7) are mounted on a single shaft (9) actuated by the motor (100) of the press.

3. The device according to claim 1 or 2, **characterized in that** said first lever system (6) comprises a fork lever (10), hinged to the frame of the machine in a fork hinge (11), and is provided with a first arm (63) and with a second arm (62).

4. The device according to one or more of the preceding claims, **characterized in that** said second lever system (8) comprises a rocker lever (81, 82), which is constituted by a first arm (81) and a second arm (82) and is connected to a third lever (83), which is associated with said movable bed (3).

5. The device according to one or more of the preceding claims, **characterized in that** said second arm (62) of said first lever system (6) has, at its end, a first cam follower (66), which co-operates with an internal profile (51) of said first cam (5); said first arm (63) of said fork lever (10) has a second cam follower (68), which co-operates with said complementary cam (55); said cam followers (66, 68) provide said first desmodromic system, with said first cam (5) and with said complementary cam (55), respectively; said first desmodromic system is constituted by said first lever system (6) which produces the vertical motion of said movable bed (3).

6. The device according to one or more of the preceding claims, **characterized in that** said rocker lever (81, 82) of said second lever system (8) is hinged to said frame of the machine in a rocker hinge (84) which is arranged in the connection region of said arms (81, 82) that constitute said rocker lever (81, 82); a free end of said first arm (81) comprises a first cam follower (85), which co-operates with a first profile (71) of said second cam (7); said second arm (82) has a second cam follower (86), which co-operates with a second profile (72) of said second cam (7); said second arm (82) has a free end pivoted to said third lever (83) in an arm hinge (87); said third lever (83) is hinged to said movable bed (3) in a lever hinge (88) which is arranged laterally thereto; said second lever system (8) allows, by means of the rotation of said second cam (7), the tilting motion of said movable bed (3).

7. The device according to one or more of the preceding claims, **characterized in that** it comprises a centering system which allows centering of the mold guiding posts (22) in adapted seats of the lower mold nest (17) during the closure thereof.
